# EUROPEAN PATENT APPLICATION

(11) **EP 0 543 577 A2**
(43) Date of publication of application: **26.05.1993**
(21) Application number: 92310382.4
(22) Date of filing: 13.11.1992
(51) Int. Cl.: G01M 11/00

(54) **Local loss test set for optical fibre**

(30) Priority: 19.11.1991 US 794075
(71) Applicant: MINNESOTA MINING AND MANUFACTURING COMPANY, St. Paul, Minnesota 55133-3427 (US)
(72) Inventor: Buerli, Richard, c/o Minnesota Mining and, St. Paul, Minnesota 55133-3427 (US); Hulboy, Brett L., c/o Minnesota Mining and, St. Paul, Minnesota 55133-3427 (US); Elsasser, Norman, c/o Minnesota Mining and, St. Paul, Minnesota 55133-3427 (US); Parikh, Rutesh D,. c/o Minnesota Mining and, St. Paul, Minnesota 55133-3427 (US)
(74) Representative: Baillie, Iain Cameron

(57) **Abstract**

An apparatus for locally determining the attenuation of an optical signal across a fault in an optical fiber. The local loss test set includes a base unit which houses all of the system's electronic components, except for a photodetector which is located in a remote receiver unit. A remote transmitter unit is also provided; a light source is preferably housed in the base unit, and connected to the remote transmitter by an optical fiber. The remote transmitter utilizes microbending to inject the test signal, and the remote receiver similarly utilizes microbending to withdraw signals. A reference signal is captured from the fiber under test between the transmitter and the fault. A loss signal is captured from the opposite side of the fault, and compared by a processor to yield relative loss measurement (in decibels). The processor checks the loss against preset passing and failing thresholds. The light source is preferably modulated, and the receiver includes a bandpass filter tuned to the frequency of the modulator. A second transmitter may be used with a bidirectional receiver to further enhance the accuracy of the measurements.

## Description

### Background of the Invention

### 1. Field of the Invention

The present invention generally relates to devices for testing the transmission of light signals through optical fibers, and more particularly to a test set providing accurate measurement of signal attenuation across a fault, such as a splice, in an optical fiber.

### 2. Description of the Prior Art

In recent years, fiber optic cables have replaced traditional copper wire as the preferred medium for telecommunications. Although optical fibers have certain advantages over copper wire, they are still subject to attenuation of the light signals travelling therein, since there can never be 100% transmission of light through these fibers. Accordingly, it is imperative to provide optical fibers which have the minimum attenuation possible, in order to maximize the length of fiber which may carry a signal without the addition of expensive repeaters or amplifiers.

Although some attenuation is caused by Raleigh scattering within the fiber core, the most significant cause of signal attenuation is a fault in the optical fiber. Faults may take the form of a kinks or microbends in the fiber (which allow light to escape through the buffer coating of the fiber), but.the greatest signal loss typically occurs at connections, or splices, between two fiber ends, which induce Fresnel reflections of the transmitted signal at the fiber end faces. Such reflections may be minimized by proper alignment of the fibers and the use of index matching gels, but there is always a detectable signal loss. It is necessary to so splice fibers together in order to provide extremely long fiber paths, requiring several cable sections, or to repair a break or other fault in a fiber. This is accomplished through the use of a variety of disengagable connectors, or permanent splices formed by bonding, fusion welding, or mechanical clamping.

One device which may be used to detect discrete losses caused by faults is an optical time domain reflectometer (OTDR). In its simplest construction, an OTDR includes a light source, such as a pulsed laser diode; an optical coupler, including a beam-splitter, connecting the light source to the near end of the fiber under test (FUT); and a photodetector positioned adjacent the beam splitter. When a test signal is sent down the FUT, backscattering and reflections within the fiber core return to the near end of the FUT and are sensed by the photodetector. The trace signal of the backscattering and reflections provides clues as to faults in the FUT, including the approximate amounts of the splice loss. An exemplary OTDR is disclosed in U.S. Patent No. 4,289,398 issued to R. Robichaud.

Although OTDR's are extremely useful in the location of multiple faults, they have three clear disadvantages with regard to measurement of specific faults, e.g., splices. First of all, it is necessary to connect the OTDR to the terminal end of the fiber in order to inject and detect the test signal and reflections. This means that the OTDR user must be remote from the splice location, usually by several kilometers. Secondly, due to the distances that the signal and reflections must travel, the measurements of splice loss are not as accurate as they could be if the loss was measured closer to the splice. Finally, the splice loss cannot be quickly determined after completion of the splice, but rather the technician must move to the remote terminal site in order to set up the OTDR. If the just installed splice has an unacceptable loss, the technician must return to the splice location and repeat the entire effort, unless two technicians are involved which is clearly undesirable.

Clearly, then, it is preferable to make the loss measurement immediately upon completion of the splice and at the splice location. Alternative devices have been designed for just this purpose, variously known as local injection units, local splice injection modules, splice verification sets, local loss test sets, or light injection and detection devices. Nearly all of the prior art local loss test sets rely on the microbending principle, in which a portion of the fiber is slightly bent, but not enough to cause permanent damage to the fiber. By so bending the fiber, a portion of the light signal passing therethrough may escape through the cladding layer of the fiber, and through the buffer coating over the cladding. The same principle may be used to inject light into a fiber at a microbend.

These devices are often used in the splicing process, in order to optimize the fiber alignment and, hence, minimize insertion loss. For example, U.S. Patent Nos. 4,728,169 and 4,790,617, both issued to Campbell et al., disclose the use of a fusion splicer which injects a signal into a first optical fiber on one side of the splice, the signal being directed toward the splice, and which further detects the signal which has passed through the splice into a second optical fiber. The positions of the fiber end faces are adjusted until the detected signal is maximized, and the fiber ends are then fused, hopefully resulting in a splice with the minimum insertion loss possible. The primary limitation of this device is that it provides only a qualitative, not quantitative, loss measurement. A commercially available device such as just described is sold by GTE under the brand name OPTIMIZER.

Another local loss test system is manufactured by American Telephone and Telegraph, and comprises two units, a light injection module which utilizes microbending to place the test signal in the fiber, and a splice alignment/measurement module which provides a readout of the attenuation of the signal across a splice. The values of certain parameters regarding loss measurement (based on the specifications of the injection module and assumed fiber properties) are preprogrammed into the memory of the measurement module, which consequently can provide an estimate of the splice loss.

This kind of system, however, still has several disadvantages which result from the assumption that the preprogrammed values sufficiently approximate the corresponding actual values for every splice loss measurement. For example, if the diameter of the fiber changes from splice to splice, then the amount of power in the injected signal will change due to the slight difference in the effective bend radius of the fiber at the point of injection. Loss measurement also depends on the index of refraction of the fiber core, and on other parameters which may vary from splice to splice. Consequently, the foregoing system can only provide an estimate of the splice loss, rather than an actual value based on the unique characteristics of each splice environment. Moreover, the receiver of this system is essentially usable only with a specific light injection module. These restrictions are becoming more significant as telephone companies and private networks are demanding more exacting requirements for splice loss measurement, e.g., measurement to within 0.05 dB at .25 dB loss.

Another splice loss measurement technique is disclosed in U.S. Patent No. 4,708,476 issued to So et al. That technique, however, suffers from some of the same disadvantages discussed above, and requires additional steps. First of all, the power of test signals in each fiber must be measured by attaching detectors to the ends of the fibers prior to the splice (and thus it is clear that this technique cannot be used on preexisting faults, i.e., bends in the fiber). In addition to the two power reference measurements, a third reference measurement is taken from an intermediate portion of one of the fibers based on the first test signal. After splicing, a fourth reference measurement is taken at the same intermediate portion of the fiber, but based on the second test signal. All four measurements are combined to yield the splice loss. Besides the complexity of this technique, it is limited by the use of fiber-end detectors, which may yield varying results depending upon the reliability of the craftsperson who is applying the end detectors to the fibers (i.e., repeatability of the fiber-end measurements). Similarly, since the light injection module must be moved from one fiber to the other, deviations in the manner in which in injection module is applied to the two fibers may induce further errors. Finally, the technique of the '476 patent requires predetermination of a calibration factor which is based on the particular detectors being used. It would, therefore, be desirable and advantageous to devise a loss measurement apparatus which overcomes the foregoing limitations by measuring splice loss based on the actual parameters surrounding each specific loss measurement, and by reducing the number of measurements to be taken which would reduce user-induced errors. Such a system would preferably include a measurement module which is not strictly limited to use with one particular signal source, and which is self-calibrating.

### Summary of the Invention

The foregoing objectives are achieved in a local loss test set comprising a receiver unit having means for withdrawing a light signal, memory means for storing first and second signal measurements, processing means for comparing the values of the signal measurements, and means for displaying the result of said comparison. The receiver thus may be used to take the first signal measurement on one side of the splice (i.e., between the signal source and the splice), and compare that to the second measurement which is taken from the other side of the splice. By comparing splice attenuation against a contemporaneous measurement of initial signal strength, the best possible measurement of actual splice loss may be achieved.

In so calibrating the loss measurement to the initial signal strength, it is preferable to provide a light withdrawal means which extracts the light in a consistent and repeatable manner, at least for a given type of fiber. The preferred means includes a piston terminating in a head having a convex surface and a groove formed in the surface which catches the fiber under test and clamps it against a concave silica form. A light detector is attached to the form at an appropriate location and orientation to detect the signal escaping at the microbend of the fiber. The fiber receiving groove in the piston head, along with springs (or other biasing means) controlling the piston, provide a consistent clamping force to optimize calibration of the loss signal to the reference signal.

While the receiver of the present invention may be used with several different types of light sources, certain economies in manufacture may be achieved by designing the receiver to cooperate with the characteristics of a particular transmitter (light signal source). In the preferred embodiment, the receiver uses a low cost photodetector having a relatively high noise current; the effects of the noise, however, are minimized by using a transmitter which has laser diodes, providing more power than, e.g., light-emitting diodes, and by filtering the measured signal according to the modulation of the laser source. The electronic components of the receiver and transmitter may be combined in a base unit, with their mechanical components located in separate, tethered units. A second transmitter may be employed, provided the receiver is bidirectional, to further improve the accuracy of the loss measurement.

### Brief Description of the Drawings

The novel features and scope of the invention are set forth in the appended claims. The invention itself, however, will best be understood by reference to the accompanying drawings, wherein:
Figure 1 is a perspective view of the receiver of the present invention, depicting the embodiment wherein the optomechanical components are housing in a remote, tethered unit;
Figure 2 is an exploded perspective view of the receiver unit; certain features shown with dashed lines pertain to the transmitter used with the present invention.
Figure 3 is a block diagram of the electronics of the receiver of the present invention, with certain features shown in dashed lines, pertaining to the transmitter; and
Figure 4 is a plan view of the user interface panel of the combined receiver/transmitter of the present invention, showing the input keys and the LCD display.

### Description of the Preferred Embodiment

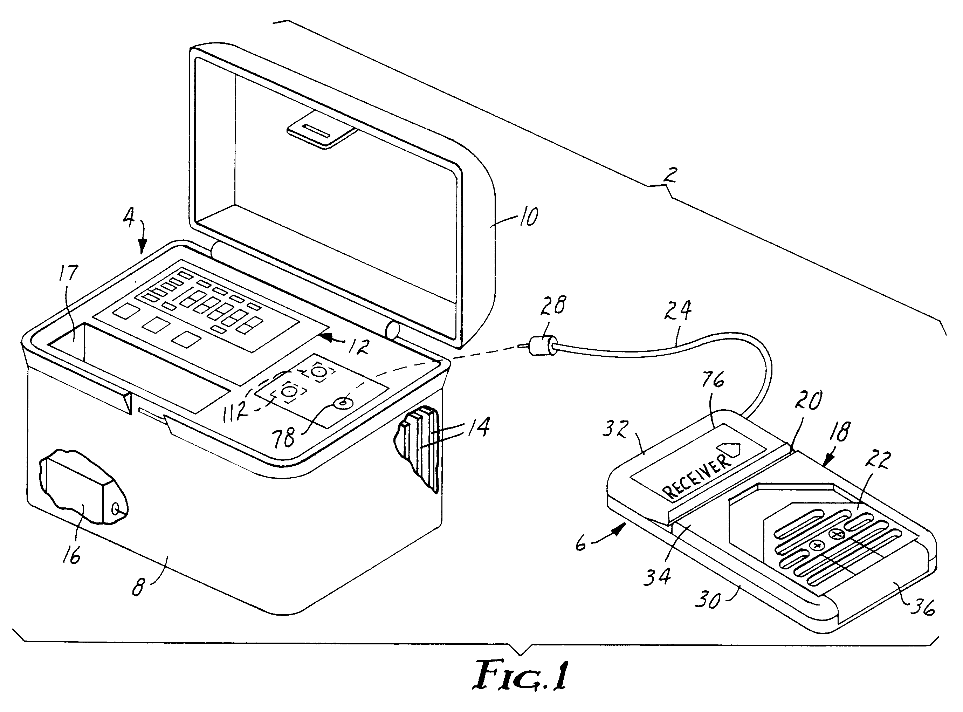

With reference now to the figures, and in particular with reference to Figure 1, the local loss test set of the present invention basically comprises a receiver **2** which, as explained further below, preferably takes the form of a base unit **4** housing the electronic components of receiver **2**, and a remote unit **6** housing the optomechanical components of receiver **2**. Base unit **4** is formed of a body **8** having a cover **10**, forming a weatherproof container for base unit **4**, and further includes a user interface panel **12** which is described below in conjunction with Figure 5. Body **8** and cover **10** may be constructed of any durable material, preferably a polymer such as polycarbonite. The various electronic components of receiver **2** are located on printed circuit boards **14** within body **8.** To provide portability of receiver **2**, a battery **16** is placed within body **8**. Body **8** may also be provided with a compartment **17** for storing remote unit **6**, or other items such as the transmitter unit discussed further below.

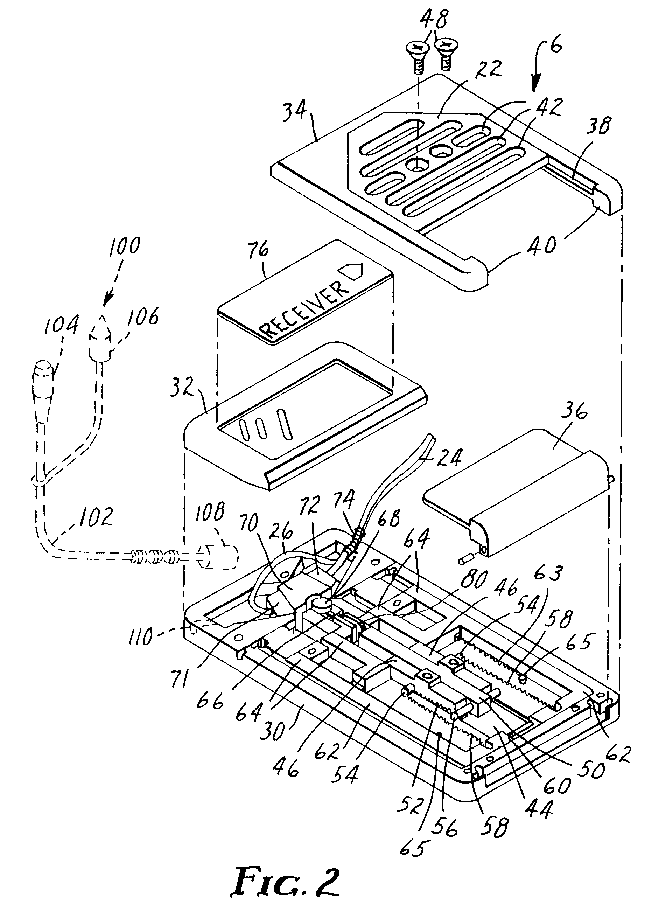

Remote unit **6** generally comprises a housing **18** having a fiber receiving slot **20** and a fiber clamp actuation plate or slide **22**. A set of wires **24** terminating in a coaxial connector **28** emanates from a hole in housing **18**. Wires **24** are preferably about 75 cm long, allowing relatively free movement of remote unit **6**. Although the dimensions of housing **18** may vary considerably, remote unit **6** is preferably hand-held. Accordingly, exemplary dimensions of housing **18** are 3 cm x 12 cm x 1.2 cm. Housing **18** may also be constructed of the same polycarbonite material used in forming body **8**, or any other durable material such as anodized aluminum. Plate **22** slides between the open position illustrated in Figure 1, and the closed position illustrated in Figure 2, resulting in the clamping of a fiber which has been inserted in slot **20**.

The internal components of remote unit **6** are illustrated in the exploded perspective of Figure 2. Certain features shown with dashed lines in Figures 1, 2 and 3 refer to the transmitter which is preferably used with receiver **2**, and are explained further below. Housing **18** is preferably constructed from a base **30**, a cover **32**, a slide jacket **34**, and a slide support plate **36**. These parts may be appropriately fastened together by any convenient means such as screws. The edges of slide plate **22** extend into notches **38** formed in the legs **40** of slide jacket **34** whereby plate **22** may slide freely within jacket **34**. Slide **22** preferably has a plurality of surface features such as recesses **42** which facilitate manual sliding. A mound or knob may optionally be formed in slide **22**.

Base **30** of housing **18** has several cavities, channels and bosses formed therein for receiving the mechanical and optical components of remote unit **6**. These features may be formed by integrally molding them into base **30**, or by attaching insert members. One channel **44** serves to guide slide blocks **46** which are fixed to slide plate **22** by screws **48**. A sliding shaft **50** is slidably interposed between slide blocks **46**, and is further coupled to them by means of two springs **52**. As explained below, these springs control the pressure which is ultimately applied to the FUT. Springs **52** are attached at one end to pins **54** of slide blocks **46**, and at the other end to pin **56** which passes through a hole in the proximate end of shaft **50**. Pins **54** also receive another set of springs **58** attached to a rod **60**, near the bottom portion of base **30**, which unites two locating arms **62**. Locating arms **62** terminate near slot **20** in a plurality of alignment fingers **64**. Small pads of a soft material, such as urethane foam (85 Shore A durometer), cover the end faces of alignment fingers **64**. Locating arms **62** are biased toward the bottom portion of base **30** by springs **63** which are attached to pegs **65** formed integrally with base **30**.

A piston rod **66** is attached to the distal end of shaft **50**, and generally aligned with shaft **50**. Rod **66** terminates in a generally cylindrical piston head **68**, having a radius of about 2.9 mm. Adjacent to piston head **68**, opposite rod **66**, is an optically receptive form **70**, preferably formed of silica (glass). The surface of form **70** proximate piston head **68** is concave whereby, when an optical fiber is clamped between head **68** and form **70**, it is bent or curved slightly. The radius of curvature of the concave surface is about 3.0 mm. One surface of form **70** is at an oblique angle (preferably about 67.5°) with respect to the tangent formed between head **68** and form **70**, and a photodetector **72** is placed against this surface whereby a portion of the light escaping from a clamped fiber will be transmitted to detector **72**. Detector **72** is connected to wires **24**, which pass through and are attached to a spring **74** to provide strain relief for wires **24**.

Operation of remote unit **6** begins with the placement of a portion of the FUT into slot **20**. A label **76** has an arrow to indicate the anticipated direction of travel of the test signal. In this regard, means may be provided to detect a signal from either direction (as discussed further below), but care must be taken if there is only one direction of travel of the test signal since the fault (splice) is only on one side of receiver **2**. Slot **20** is located so as to place the fiber between piston head **68** and form **70**. In the relaxed state of remote unit **6**, slide plate **22** is biased toward the bottom portion of housing **18** by the combined action of springs **58** and **63**. The spring constant of springs **58** should be greater than that of springs **63**. Due to the abutment of the ends of slide blocks **46** against pin **56**, shaft **50** and piston head **68** are also in the retracted position. Locating arms are additionally retracted due to springs **63**.

When slide plate **22** is moved forward, toward the top of remote unit **6**, blocks **46** move with plate **22**, causing locating arms to slide forward by virtue of springs **58**, and also moving shaft **50** forward due to springs **52**. Piston head **68** then clamps the fiber against form **70**; fingers **64** simultaneously secure portions of the FUT, on either side of piston head **68**, aligning the fiber so as to minimize unnecessary bending other than at piston head **68**. Use of soft pads at the ends of alignment fingers **68** prevents any damage to those portions of the FUT. Although the specific values of the spring constants for springs **58** and **63** is not critical, it is empirically preferable to provide a spring **52** which has a spring constant of about 0.0292 N/mm, in order to provide an optimum clamping force on the fiber. Piston head **68** preferably has a circumferential groove is formed therein for receiving the FUT. Use of such a groove, combined with the precise clamping force provided by spring **52**, imparts exceptional consistency and repeatability with regard to multiple clampings and measurements on a given fiber. The groove is approximately 250 µm deep. A leaf spring **80** lies in a channel formed in shaft **50**. The hump in leaf spring **80** contacts the inner surface of slide jacket **34**, restricting transverse movement of shaft **50** and piston head **68** to assure that the circumferential groove in piston head **68** is always positioned properly.

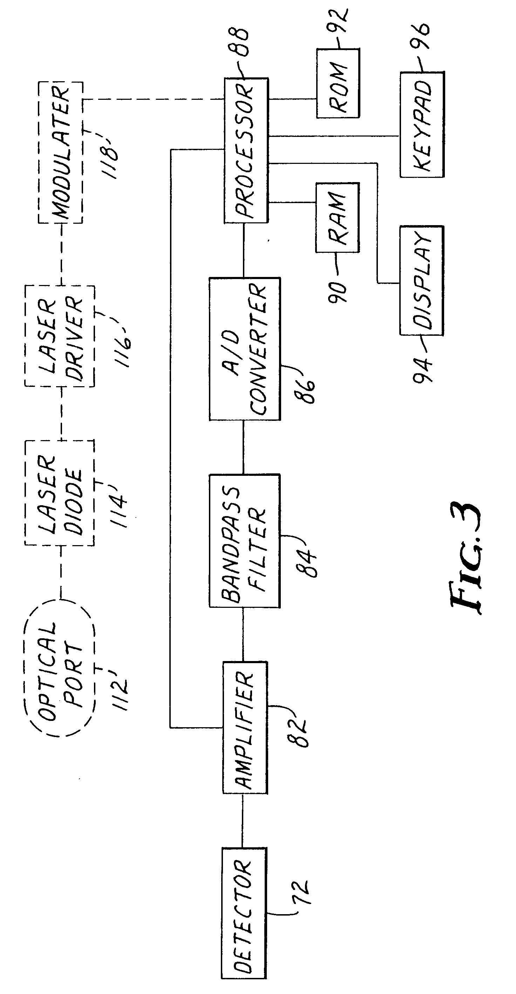

If there is a test signal travelling along the FUT in the proper direction, a portion of its light will escape through the bend at piston head **68**, enter form **70**, and be captured by detector **72**. Wires **24** then convey the measured signal to base unit **4** by means of connector **28** which mates with receptacle **78** in base unit **4**. The electrical signal is then processed by the electronic components depicted in block form in Figure 3. The electrical signal is first conditioned by an amplifier **82** and a bandpass filter **84**. The conditioned signal is converted from analog-to-digital value by A/D converter **86**. The digital value is recorded by a processor **88** (such as the MC68000 processor sold by Motorola, Inc., of Schaumberg, Illinois) and stored in random-access memory (RAM) **90**. Amplifier **82** may be range selectable by processor **88** in order to optimize the electrical signal at the input of A/D converter **86**. This provides the bit resolution necessary to achieve an accuracy of 0.1 dB or better in loss measurement. Read-only memory **92** is provided to store the program instructions for processor **88**, which is also connected to a display **94** and a keypad **96**. As detailed further below, keypad **96** may be used to control processor **88** whereby a first, reference measurement on the side of the splice toward the signal source may be stored in RAM **90**, and a second, loss measurement on the opposite side of the splice may be compared with the reference measurement, yielding an accurate splice loss value.

Those skilled in the art will appreciate that receiver **2** may be used with essentially any signal source, e.g., a source which injects a test signal at the terminal end of the fiber, or one which injects light locally through microbending of the fiber. It will further be appreciated, however, that certain economies in the manufacture of receiver **2** may be achieved by designing a transmitter to complement the specifications of receiver **2**. In the preferred embodiment of the present invention, the electronic components of such a transmitter are housed in body **8,** and the mechanical components are housed in a remote transmitter unit which is nearly identical to remote unit **6** of receiver **2**. For this reason, the transmitter unit **100** of the present invention may be explained with reference to each of the foregoing figures, in which details of the optional transmitter are indicated in dashed lines.

Referring back to Figure 2, transmitter unit **100** includes all of the structural features of remote unit **6** except for photodetector **72** and wires **74** In lieu of those elements, transmitter unit **100** has an optical fiber **102** terminated at its distal end in an optical connector **104**. A cover **106** is preferably provided for connector **104.** The proximate end of fiber **102** terminates in a light-transmitting element **108**, such as the SELFOC™ collimator sold by Nippon Sheet Glass Company of Tokyo, Japan. Element **108** abuts one side of form **70** whereby, when an optical signal is injected into fiber **102** via connector **104**, it passes through element **108**, into form **70**, and then into the FUT held between form **70** and piston head **68**. Since transmitter unit **100** and remote unit **6** appear nearly identical, it is desirable to have fiber **102** emanate through another hole **110** in the opposite side of body **8** with respect to the hole for wires **24**. The only other difference between remote unit **6** and transmitter unit **100** is the writing on label **76** to indicate "TRANSMITTER" rather than "RECEIVER."

Connector **104** of fiber **102** may be connected to any appropriate signal source but, as mentioned above, the source is preferably contained within base unit **4**, and connector **104** is connected to one of the optical ports **112** provided on base unit **4**. With further reference to Figure 3, optical port **112** is optically coupled to a light source such as a laser diode **114**. Laser diode **114** is connected to a driver **116** which is regulated by a modulator **118**, which in turn is controlled by processor **88**.

Although, as previously mentioned, transmitter **100** and its associated electronic components are not essential to operation of receiver **2,** they may be selected to cooperate with the various components of receiver **2**. For example, receiver **2** could utilize a sensitive photodetector in which case a high-power light-emitting diode (LED) could be used in lieu of the more expensive laser diode. In the preferred embodiment, however, the stronger power laser diode (such as that sold by MRV of Chatsworth, California, under part number MR-LDSP010) is used which complements the use of a low cost photodetector **72**, such as the germanium detector sold by EG&G Judson of Montgomeryville, Pennsylvania, under part number J1630-R30M. Although this detector exhibits relatively high noise, this undesirable effect can be adequately compensated by the use bandpass filter **84** which is tuned to the frequency of modulator **118** (preferably 1 kHz). Due to the fact that loss measurements with this system are based on the concurrent power level of the injected light, it is not necessary to provide a transmitter which has a consistent output or coupling efficiency, i.e., accurate repeatability in the transmitter is not required. Laser diode **114** may produce light of any wavelength, preferably 1300 nm; its spectral width is not critical. The aforementioned germanium detector has an acceptable spectral response in the range of 800 nm to 1800 nm.

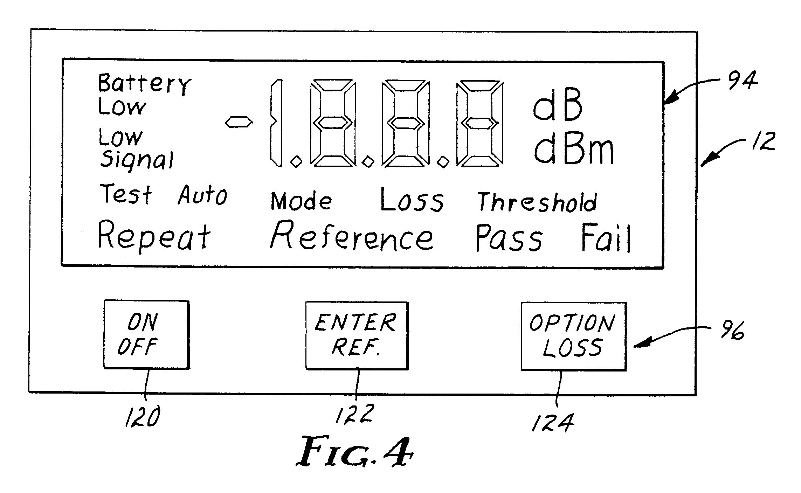

The program flow executed by processor **88** may best be understood with reference to Figure 4, which depicts user interface panel **12**, comprising display **94** and keypad **96**, including input keys **120**, **122** and **124**. Display **94** is preferably a liquid crystal display (LCD), and it is understood that the various fields shown in Figure 4 are not always displayed, e.g., the words "Battery Low" will appear on display **94** only when a low power state is detected by processor **88**. Base unit **4** is powered up by hitting on/off key **120**, and the user is immediately prompted to obtain a reference measurement (using remote unit **6**) by the word "Reference" being flashed on display **94**. Prior to taking measurements, however, certain variables may be selected by pushing option/loss key **124**. The user will then be prompted to enter appropriate values for passing and failing thresholds. For example, when option/loss key **124** is depressed for about five seconds, the words "Threshold" and "Pass" will appear on display **94**, and a minimum threshold value such as 0.3 dB will appear in the numeric field. Higher threshold values are sequentially displayed (in increments of, e.g., 0.05 dB) by continued depression of option/loss key **124.** When the proper value is displayed, enter/reference key **122** is pushed. The word "Pass" will then be extinguished from display **94**, and "Fail" will appear. The same procedure is used to select the threshold for an unacceptable splice loss. Default settings of 0.5 dB and 0.7 dB for passing and failing, respectively, may be provided in the program instructions stored in ROM **92**.

After setting the threshold values, or if the default settings are acceptable, the user clamps transmitter unit **100** onto a portion of the FUT. It is preferable to clamp transmitter unit **100** at least 30 cm away from remote unit **6** in order to avoid cladding mode signals which might lead to false measurements. The arrow on label **76** of transmitter unit **100** should point toward the splice or other fault to be tested. Remote unit **6** is then clamped onto the FUT between transmitter **100** and the fault (with the arrow on label **76** aligned with the arrow on the transmitter), and enter/reference key **122** is depressed. The word "Test" appears briefly on display **94** as base unit **4** executes diagnostics and measures the reference signal; several measurements may be made and averaged to yield the value of the reference signal. Base unit also confirms that the power level measured by receiver **2** is acceptable (e.g., at least one nanowatt). If not, the words "Low Signal" appear on display **94**, and the word "Reference" begins flashing again, prompting the user to reclamp one or both of the transmitter and remote units **100** and **6**.

If the reference measurement is acceptable, the word "Reference" is extinguished from display **94**, and the user then moves remote unit **6** to the side of the fault opposite transmitter unit **100**. Option/loss key **124** is depressed, and a loss measurement is made. Again, several successive measurements may be automatically taken and averaged to yield the value of the loss signal. This value is then compared to the value of the reference signal. If the difference (in decibels) is lower than the pass threshold, the word "Pass" appears on display **94;** if the difference is greater than the fail threshold, the word "Fail" appears. If the difference is between the two thresholds, then the word "Repeat" appears, and the word "Reference" will begin flashing again to prompt the user to repeat the measurements. In any case, the loss is also displayed in the numeric field of display **94**. This entire process is very simple and performed relatively quickly, yet yields a highly accurate measurement of actual signal loss through the splice.

Those skilled in the art will appreciate the various permutations that may be provided in the physical embodiments of the base unit, transmitter and receiver. For example, all of the above elements could be combined in one housing having a single slot running therethrough, with mechanisms for clamping the FUT at three different locations along the slot, i.e., one location for injection of the test signal, and two for withdrawal of the test signal, on either side of the fault. Alternatively, base unit **4** could have a slot therein for injection of the test signal, but remote unit **6** could still be used to withdraw the reference and loss signals. In other embodiments, transmitter unit **100** could include the light source (laser diode), and possibly other components such as the driver and modulator, with a wire cable connected to base unit **4** rather than the optical cable **102**. Similarly, remote receiver **6** could have an optical fiber connected to base unit **4** for relaying the signal captured from the FUT to a photodetector located within base unit **4**. Remote unit **6** could even be set up as a wireless remote unit if a separate power supply were provided in it along with means for electromagnetically transmitting the detected signal to base unit **4**.

A further alternative embodiment contemplates the use of two transmitters and a bidirectional receiver. Each of the transmitters is essentially identical to transmitter unit **100**; they are clamped on either side of the fault to be tested, with the test signals injected in a direction toward the fault (the arrows on the transmitter labels may be oppositely directed to facilitate proper orientation). Base unit **4** would contain two sets of laser diodes, drivers and modulators, or a beam splitting device may be employed to provide signals to the two optical fibers connecting base unit **4** to the transmitters.

The bidirectional receiver is also essentially identical to remote unit **6** except for the provision of an additional photodetector **71** and its corresponding wire pair **26** (illustrated in Figure 2). Base unit **4** could contain a duplicate set of the amplifier, filter and A/D converter used to condition the electrical signals, or the signals could be multiplexed. In this manner, when the bidirectional receiver is clamped to the FUT (on either side of the fault), two measurements are taken, one being a first reference signal and the other being a first loss signal. The receiver is then clamped to the other side of the fault (maintaining the same orientation with respect to the fiber axis), and a second reference signal and second loss signal are taken. Processor **88** then compares the first reference signal to the second loss signal, and the second reference signal to the first loss signal, providing two relative loss values for each direction of travel through the fault. These values may be averaged to yield an extremely accurate loss measurement which is then displayed as discussed above. Finally, the accuracy of such a redundant system could further be enhanced by the use of two different wavelengths of light in the injected signals.

Although the invention has been described with reference to specific embodiments, this description is not meant to be construed in a limiting sense. Various modifications of the disclosed embodiment, as well as alternative embodiments of the invention, will become apparent to persons skilled in the art upon reference to the description of the invention. For example, the mechanism described herein for clamping the FUT could be replaced by the mechanism described in pending U.S. Patent Application Serial No, 07/590,011 (assigned to the assignee of the present invention). It is therefore contemplated that such modifications can be made without departing from the spirit or scope of the present invention as defined in the appended claims.

## Claims

1. An apparatus for measuring the attenuation of an optical signal across a fault in an optical fiber, comprising:
means for withdrawing a portion of the optical signal from the optical fiber;
optical detector means, connected to said withdrawing means, for producing an electrical signal based on said withdrawn portion of the optical signal;
memory means for electronically storing a first value corresponding to the strength of said electrical signal;
processing means, connected to said detector means and said memory means, for comparing said first value to a second value corresponding to the strength of a second electrical signal produced by said detector means in response to a second withdrawn signal; and
means for displaying the result of said comparison.

2. The apparatus of Claim 1 wherein the optical signal is modulated at a known frequency and said detector means includes filter means tuned to said frequency.

3. The apparatus of Claim 1 further comprising means for injecting the optical signal proximate the fault., said injecting means being controlled by said processing means and including:
a light source;
means for bending the optical fiber against an optically transmissive form; and
optical fiber means for remotely connecting said light source to said form.

4. An apparatus for measuring optical attenuation through a fault in an optical fiber, comprising:
a light source;
means for injecting a test signal from said light source into the optical fiber proximate the fault;
means for capturing a first optical signal by withdrawing a portion of said test signal from the optical fiber on a first side of the fault, and for capturing a second optical signal by withdrawing a portion of said test signal from the optical fiber on a second side of the fault;
optical detector means, connected to said capturing means, for producing first and second electrical signals based on said first and second optical signals, said first and second electrical signals having first and second values, respectively;
memory means for electronically storing said first and second values;
processing means, connected to said detector means and said memory means, for calculating the decibel difference between said first value and said second value; and
means for displaying said decibel difference.

5. The apparatus of Claim 4 wherein:
said injecting means injects said test signal in the optical fiber on a first side of the fault, and further comprising second means for injecting a second test signal in the optical fiber on a second side of the fault;
said capturing means further captures a third optical signal by withdrawing a portion of said second test signal from the optical fiber on said first side of the fault, and captures a fourth optical signal by withdrawing a portion of said second test signal from the optical fiber on said second side of the fault;
said optical detector means further produces third and fourth electrical signals based on said third and fourth optical signals, said third and fourth electrical signals having third and fourth values, respectively;
said memory means further stores said third and fourth values;
said processor means further calculates the decibel difference between said third value and said fourth value, and averages this difference with said decibel difference of said first and second values to arrive at an average loss value; and
said displaying means displays said average loss value.

6. The apparatus of Claim 4 wherein said injecting means and said capturing means are both remote from said processing means.

7. The apparatus of Claim 6 wherein
said capturing means includes a photodetector connected to said processor means by a plurality of wires; and
said injecting means includes means for bending the optical fiber against an optically transmissive form, said form being optically connected to said light source by optical fiber means.

8. A local loss test set for measuring optical attenuation across a splice in a fiber under test (FUT), comprising:
a light source;
means for modulating said light source at a known frequency;
transmitter means for injecting a test signal from said light source into the FUT proximate the splice, said transmitter means including means for bending the FUT against an optically transmissive form;
optical fiber means remotely connecting said form to said light source;
receiver means for capturing a reference signal by withdrawing a portion of said test signal in the FUT between said transmitter means and the splice, and for capturing a loss signal by withdrawing a portion of said test signal in the FUT on a side of the splice opposite said transmitter means, said receiver means further including a photodetector producing first and second electrical signals based on said reference and loss signals, said first and second electrical signals having first and second values, respectively;
processing means remotely connected to said photodetector by wires, for controlling said modulating means and for calculating the decibel difference between said first value and said second value;
memory means connected to said processor means for electronically storing said first and second values; and
means for displaying said decibel difference.

9. The local loss test set of Claim 8 further comprising means for injecting a second test signal into the FUT on said side of the splice opposite said first transmitter means, and wherein:
said receiver means further captures a second loss signal by withdrawing a portion of said second test signal in the FUT between said transmitter means and the splice, and captures a second reference signal by withdrawing a portion of said second test signal from the FUT on said side of the splice opposite said transmitter means;
said receiver means further includes a second photodetector producing third and fourth electrical signals based on said second reference signal and said second loss signal, respectively, said third and fourth electrical signals having third and fourth values, respectively;
said memory means further stores said third and fourth values;
said processor means further calculates the decibel difference between said third value and said fourth value, and averages this difference with said decibel difference of said first and second values to arrive at an average loss value; and
said displaying means displays said average loss value.

10. A method of measuring optical attenuation across a fault in an optical fiber carrying a first light signal, comprising the steps of:
capturing a first optical test signal by withdrawing a portion of the first light signal on a first side of the fault;
converting said first test signal into a first electrical signal;
determining the strength of said first electrical signal;
capturing a second optical test signal by withdrawing a portion of the first light signal on a second side of the fault;
converting said second test signal into a second electrical signal;
determining the strength of said second electrical signal; and
calculating the difference of said strengths of said first and second electrical signals.
